# EUROPÄISCHE PATENTSCHRIFT

(11) **EP 1 032 780 B1**
(45) Veröffentlichungstag und Bekanntmachung des Hinweises auf die Patenterteilung: **05.09.2001**
(21) Anmeldenummer: 98965676.4
(22) Anmeldetag: 17.11.1998
(51) Int. Cl.: F16H 25/24, E05F 15/16

(54) **ANTRIEBSSPINDEL**
DRIVE SPINDLE
BROCHE D'ENTRAINEMENT

(30) Priorität: 18.11.1997 DE 29720447 U
(43) Veröffentlichungstag der Anmeldung: 06.09.2000
(73) Patentinhaber: Marantec Antriebs- und Steuerungstechnik GmbH & Co. KG., 33428 Marienfeld (DE)
(72) Erfinder: HÖRMANN, Michael, D-33790 Halle (DE)
(74) Vertreter: Laufhütte, Dieter, Dr.-Ing.
(86) Internationale Anmeldenummer: EP9807374
(87) Internationale Veröffentlichungsnummer: WO9925995

(56) Entgegenhaltungen:
- EP-A- 0 485 294
- DE-A- 4 307 168
- DE-U- 29 720 447
- GB-A- 1 180 949

## Beschreibung

Die vorliegende Erfindung betrifft eine Antriebsspindel, insbesondere zum Antrieb von Garagentoren, mit an der Umfangsfläche angeordneten Ausnehmungen oder Vorsprüngen, die zum Zwecke der Axialbewegung der Antriebsspindel mit entsprechenden Vorsprüngen oder Ausnehmungen eines Führungselementes verbindbar sind.

Derartige Antriebsspindeln finden als Maschinenelemente zu Umwandlung einer rotatorischen in eine translatorische Bewegung beispielsweise in Vorschubantrieben oder Werkzeugmaschinen eine breite Verwendung. Beim Antrieb von Türen oder Toren, wie z.B. Garagentoren, werden entsprechende Spindelantriebe häufig anstelle von Ketten- oder Riemenantrieben eingesetzt und weisen gegenüber diesen einen verhältnismäßig einfachen Aufbau auf. Bekannten Spindelantrieben ist es nachteilig, daß aufgrund der teilweise erheblichen Länge der Antriebsspindel ein Transport an den Montageort aufwendig und umständlich ist und ferner die Lagerung derartiger Antriebe einen verhältnismäßig großen Platzbedarf beansprucht.

Aus der Druckschrift DE 43 07 168 A1 ist eine mehrteilige Antriebsspindel bekannt, deren Teile durch Einschlagen einer Spannhülse quer durch übereinander geschobene Abschnitte der Teile verbindbar sind. Diese Antriebsspindel ist jedoch hinsichtlich ihrer Montage und korrekten Ausrichtung der Spindelbauteile verbesserungsfähig.

Der vorliegenden Erfindung liegt daher die Aufgabe zugrunde, eine leicht transportier- und lagerbare Antriebsspindel bereitzustellen, bei der die Montage der Bauteile vereinfacht und eine korrekte Ausrichtung der Spindelbauteile gewährleistet ist.

Diese Aufgabe wird von einer Antriebsspindel gemäß Anspruch 1 gelöst. Bevorzugte Ausführungsformen der Erfindung sind Gegenstand der Unteransprüche.

Die einzelnen Bauteile der Spindel weisen vorteilhaft eine Länge auf, die ein problemloses Hantieren beim Transport sowie eine platzsparende Lagerung ermöglicht. Auf diese Weise ist es erfindungsgemäß möglich, auch lange Antriebsspindeln, die zu einer Erzeugung einer entsprechend großen Stellbewegung einsetzbar sind, problemlos zu transportieren und zu lagern. Somit wird die Dimension des beim Transport in seine Bestandteile zerlegten Spindelantriebs nicht zwingend durch die Länge der Antriebsspindel, sondern beispielsweise durch die Dimensionierung des Führungselementes bzw. einer eventuell notwendigen Haltevorrichtung bestimmt. Vor Inbetriebnahme werden die Bauteile der Antriebsspindel auf einfache Art und Weise zusammengefügt und in das Führungselement eingebracht, wobei eine derartige Montage des Spindelantriebs ohne weiteres auch von nicht fachkundigen Personen durchgeführt werden kann. Der Eingriff der Vorsprünge des Führungselementes bzw. der Spindel in Ausnehmungen der Spindel bzw. des Führungselementes bewirkt die gewünschte translatorische Bewegung der Antriebsspindel bei deren Rotation.

Gemäß einer bevorzugten Ausgestaltung der vorliegenden Erfindung ist die Antriebsspindel als Schraubenspindel mit Flachgewinde, insbesondere Trapezgewinde, oder mit Rundgewinde ausgeführt. In diesem Falle befindet sich in dem Führungselement eine entsprechende nutförmige Aussparung, in der die Gewindeflanken geführt werden.

In weiterer Ausgestaltung der vorliegenden Erfindung ist vorgesehen, daß die Umfangsfläche der Antriebsspindel eine gewindeförmige Aussparung aufweist, die mit einem Innengewinde oder mit einem Vorsprung des Führungselementes verbindbar ist. Auch hier ergibt sich zwischen Antriebsspindel und Führungselement ein entsprechender Eingriff, der bei Rotation der Antriebsspindel eine gewünschte translatorische Bewegung bewirkt, die zum Öffnen oder Schließen beispielsweise eines Garagentores erforderlich ist. Das Führungselement kann mit einem Innengewinde ausgeführt sein, das in die Aussparung der Antriebsspindel eingreift. Ebenso ist es möglich, daß das Führungselement lediglich einen Vorsprung aufweist, der in die gewindeförmige Aussparung der Antriebsspindel eingreift. Um die Reibung zwischen Führungselement und Antriebsspindel zu verringern ist es ebenso denkbar, daß der Vorsprung nicht starr, sondern als Kugel oder Walze ausgeführt ist. Dem Nachteil einer aufwendigeren Herstellung steht der Vorteil gegenüber, daß die Reibung und somit auch der Verschleiß bei einer derartigen Ausgestaltung herabgesetzt werden kann.

Gemäß der vorliegenden Erfindung weist die Antriebsspindel eine axial verlaufende Bohrung auf, in die ein Stützelement wenigstens teilweise einführbar ist. Die Vorsehung eines derartigen Stützelementes vereinfacht zum einen die Montage der Bauteile der Antriebsspindel, da diese in einfacher Weise auf das Stützelement aufgeschoben werden können und anschließend nur noch miteinander zu verbinden sind. Zum anderen gewährleistet ein derartiges Stützelement die korrekte radiale Ausrichtung der Spindelbauteile, die für eine einwandfreie Funktion des Spindelantriebs erforderlich ist.

Das Stützelement kann aus einem Seil, einem Stab oder einem Rohr bestehen.

Besonders vorteilhaft ist es, wenn das Stützelement als Stab oder Rohr ausgebildet ist, wobei der Stab oder das Rohr aus wenigstens zwei Teilen aufgebaut ist, die lösbar miteinander verbindbar sind. Somit ist es möglich, auch das Stützelement, das im montierten Zustand des Spindelantriebes eine erhebliche Länge aufweisen kann, in problemlos transportierbare Teile zu zerlegen.

Die Teile des Stabes oder des Rohres können mittels eines Gewindes verbindbar sein. Die Teile des Stützelementes, die während des Transportes oder der Lagerung aus Platzgründen voneinander getrennt sind, können während der Montage problemlos miteinander verschraubt werden. Ebenso ist jede andere geeignete Verbindungstechnik anwendbar Dabei ist es sinnvoll, daß zunächst die Stützelemente zusammengeschraubt werden und darauf die Bauteile der Antriebsspindel aufgesteckt und schließlich miteinander verbunden werden.

Besonders vorteilhaft ist es, wenn zur Übertragung der translatorischen Bewegung der Antriebsspindel das Stützelement mit dem zu bewegenden Bauteil, insbesondere einem Garagentor, verbindbar ist. Das Stützelement dient damit zum einen der Vereinfachung der Montage der Bauteile der Antriebsspindel. Diese werden auf das Stützelement aufgeschoben und somit bereits in einer geeigneten radialen Position fixiert. Zum anderen kann das Stützelement bei entsprechender Dimensionierung bzw. Anzahl der das Stützelement bildenden Teile dazu verwendet werden, die gewünschte axiale Bewegung beispielsweise eines Tores zu bewirken.

Eine effektive Verbindungsbildung zwischen den Bauteilen der Antriebsspindel kann dadurch erreicht werden, daß die Bauteile stirnseitig Verzahnungen aufweisen, mittels derer diese verbindbar sind. Auf diese Weise ist ein verhältnismäßig einfaches Lösen wie auch Verbinden der Bauteile möglich.

Besonders vorteilhaft ist es, wenn die Verzahnungen als Hirth-Verzahnungen ausgebildet sind.

Gemäß einer bevorzugten Ausgestaltung der vorliegenden Erfindung ist vorgesehen, daß das Führungselement in einer Haltevorrichtung aufnehmbar ist. Die Haltevorrichtung dient im wesentlichen dazu, den Spindelantrieb beispielsweise an einer Garagendecke zu fixieren. Bei der Montage eines Spindelantriebs mit der erfindungsgemäßen Antriebsspindel wird beispielsweise zunächst die Haltevorrichtung montiert, anschließend die Bauteile der Antriebsspindel sowie die Teile des Stützelementes miteinander verbunden, die Antriebsspindel in das Führungselement eingebracht und diese Anordnung schließlich mit der Haltevorrichtung verbunden. Ebenso ist denkbar, daß das Führungselement vor dem Einbringen der Antriebsspindel an der Haltevorrichtung fixiert wird.

Die Haltevorrichtung kann aus einem Profilträger bestehen. Eine besonders einfache Verbindung ergibt sich, wenn das Führungselement in die Haltevorrichtung einschiebbar und anschließend darin fixierbar ist.

Gemäß einer bevorzugten Ausgestaltung der Erfindung ist vorgesehen, daß die Antriebsspindel und/oder das Stützelement und/oder das Führungselement und/oder die Haltevorrichtung Kunststoff aufweist oder aus Kunststoff besteht. Die Verwendung von Kunststoff bietet zum einen Gewichtsvorteile zum anderen die Möglichkeit, durch die Wahl des Kunststoffes eine breite Vielfalt an unterschiedlichen Festigkeiten und Verschleißeigenschaften der Bauteile zu erreichen. Darüber hinaus sind aus Kunststoff hergestellte Bauelemente verhältnismäßig billig und können ohne weiteres mit den erforderlichen Ausgestaltungen, wie z.B. Vorsprünge, Aussparungen oder Gewinde, hergestellt werden. Auch ist es möglich, verschiedene Kunststoffe miteinander in geeigneter Weise zu kombinieren.

In weiterer Ausgestaltung der vorliegenden Erfindung ist vorgesehen, daß die Haltevorrichtung aus Stahl und die Antriebsspindel, das Stützelement sowie das Führungselement aus Kunststoff bestehen. Die Verwendung von Stahl für die Haltevorrichtung dient der besonders sicheren und belastbaren Fixierung des gesamten Spindelantriebs an einer Wand oder Decke. Um das Gewicht der gesamten Konstruktion gering zu halten und dennoch eine einwandfreie Funktion sicherzustellen, sind die Antriebsspindel, das Stützelement und das Führungselement aus Kunststoff aufgebaut.

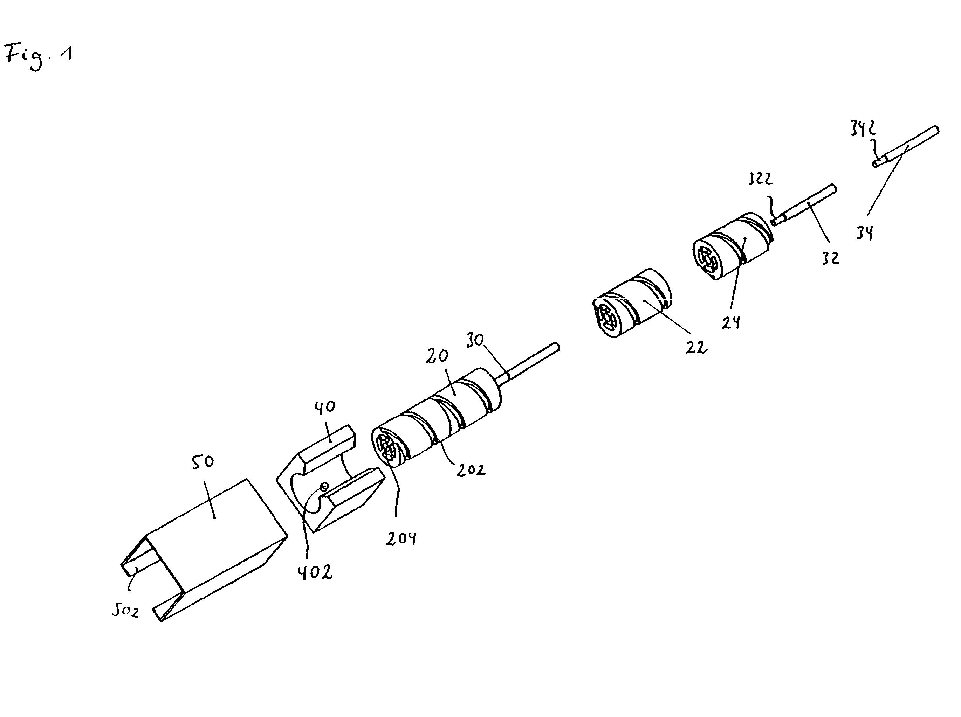

Weitere Einzelheiten und Vorteile der vorliegenden Erfindung werden anhand eines in der Zeichnung dargestellten Ausführungsbeispiels näher erläutert. In dieser zeigt die einzige
- Fig. 1:: die erfindungsgemäße Antriebsspindel mit Stützelement im zusammengefügten sowie im demontierten Zustand mit Führungselement und Haltevorrichtung.

Die Fig. 1 zeigt die Antriebsspindel 20, die an ihrer Umfangsfläche die gewindeförmig ausgestaltete Aussparung 202 aufweist. Die Antriebsspindel 20 besteht aus den Bauteilen 22, 24. Die Bauteile 22, 24 bzw. die Antriebsspindel 20 weisen eine axial verlaufende zentral angeordnete Bohrung 204 auf, in die ein Stützelement 30 einführbar ist. In der in der Fig. 1 links dargestellten Darstellung erkennt man das zusammengefügte und in die Bohrung 204 der Antriebsspindel 20 eingefügte Stützelement 30.

Das Stützelement 30 besteht aus den Teilen 32, 34, die in ihrem Endbereich jeweils ein Außengewinde 322 und 342 aufweisen. Um ein Zusammenfügen der Teile 32, 34 zu ermöglichen, sind an dem dem Außengewinde 322, 342 gegenüberliegenden Ende der Teile 32, 34 jeweils entsprechende (nicht dargestellte) Innengewindebohrungen vorgesehen.

Die Montage des Spindelantriebs erfolgt beispielsweise dergestalt, daß zunächst die Teile 32, 34 mittels der Gewinde 322, 342 sowie der entsprechenden Innengewinde verbunden werden. Im Anschluß daran werden die Bauteile 22, 24 der Antriebsspindel 20 auf das Stützelement 30 aufgesteckt und in einer geeigneten Weise, z.B. mittels stirnseitiger Verzahnungen, miteinander verbunden. Das Stützelement 30 wird schließlich, beispielsweise mittels eines Gewindes in der Bohrung 204 der Antriebsspindel 20 fixiert.

Anschließend wird die Antriebsspindel 20 in das Führungselement 40 eingeführt, wobei die Aussparungen 202 in einen in dem Führungselement 40 angeordneten Vorsprung 402 eingreifen. Diese Anordnung wird schließlich in die Haltevorrichtung 50 eingeführt, in der das Führungselement 40 mittels der Schenkel 502 formschlüssig aufgenommen wird. Die Haltevorrichtung 50 wird je nach Ausgestaltung vor oder nach dem Einschieben des Führungselementes 40 beispielsweise an einer Garagendecke befestigt.

Die erfindungsgemäße Antriebsspindel ermöglicht es, daß der Spindelantrieb selbst bei großen Spindellängen im demontierten Zustand in eine kompakte Größe aufweist, da die Antriebsspindel in beliebig dimensionierte Bauteile 22, 24 zerlegbar ist. Ebenso kann das Stützelement 30 in die Einzelteile 32, 34 zerlegbar sein, so daß die Gesamtabmessungen des zerlegten Spindelantriebs in diesem Fall weder durch die Länge der Antriebsspindel 20 noch des Stützelementes 30 vorgegeben werden.

## Patentansprüche

1. Antriebsspindel (20), insbesondere zum Antrieb von Garagentoren, mit an der Umfangsfläche angeordneten Ausnehmungen (202) oder Vorsprüngen, die zum Zwecke der Axialbewegung mit entsprechenden Vorsprüngen (402) oder Ausnehmungen eines Führungselementes (40) verbindbar sind, wobei die Antriebsspindel (20) aus wenigstens zwei Bauteilen (22, 24) besteht, die lösbar miteinander verbindbar sind, **dadurch gekennzeichnet**, daß die Antriebsspindel (20) eine axial verlaufende Bohrung (204) aufweist, in die ein Stützelement (30) wenigstens teilweise einführbar ist, das aus wenigstens zwei miteinander lösbar verbindbaren Teilen (32, 34) aufgebaut ist.

2. Antriebsspindel (20) nach Anspruch 1, **dadurch gekennzeichnet**, daß die Antriebsspindel (20) als Schraubenspindel mit Flachgewinde, insbesondere Trapezgewinde, oder Rundgewinde ausgeführt ist.

3. Antriebsspindel (20) nach Anspruch 1, **dadurch gekennzeichnet**, daß die Umfangsfläche der Antriebsspindel (20) eine gewindeförmige Aussparung (202) aufweist, die mit einem Innengewinde oder mit einem Vorsprung (402) des Führungselementes (40) verbindbar ist.

4. Antriebsspindel (20) nach einem der vorhergehenden Ansprüche, **dadurch gekennzeichnet**, daß das Stützelement aus einem Seil, einem Stab (30) oder einem Rohr besteht.

5. Antriebsspindel (20) nach Anspruch 4, **dadurch gekennzeichnet**, daß die Teile (32, 34) des Stabes (30) oder des Rohres mittels eines Gewindes (322, 342) verbindbar sind.

6. Antriebsspindel (20) nach einem oder mehreren der Ansprüche 1-5, **dadurch gekennzeichnet**, daß das Stützelement mit dem zu bewegenden Bauteil, insbesondere einem Garagentor, verbindbar ist.

7. Antriebsspindel (20) nach einem oder mehreren der Ansprüche 1-6, **dadurch gekennzeichnet**, daß die Bauteile (23, 24) der Antriebsspindel (20) stirnseitig Verzahnungen aufweisen, mittels derer die Bauteile (22, 24) verbindbar sind.

8. Antriebsspindel (20) nach Anspruch 7, **dadurch gekennzeichnet**, daß die Verzahnungen als Hirth-Verzahnungen ausgebildet sind.

9. Antriebsspindel (20) nach einem oder mehreren der Ansprüche 1-8, **dadurch gekennzeichnet**, daß das Führungselement (40) in einer Haltevorrichtung (50) aufnehmbar ist.

10. Antriebsspindel (20) nach Anspruch 9, **dadurch gekennzeichnet**, daß die Haltevorrichtung (50) aus einem Profilträger besteht.

11. Antriebsspindel (20) nach einem oder mehreren der Ansprüche 1-10, **dadurch gekennzeichnet**, daß die Antriebsspindel (20) und/oder das Stützelement (30) und/oder das Führungselement (40) und/oder die Haltevorrichtung (50) Kunststoff aufweist oder aus Kunststoff besteht.

12. Antriebsspindel (20) nach einem oder mehreren der Ansprüche 1-11, **dadurch gekennzeichnet**, daß die Haltevorrichtung (50) aus Stahl und die Antriebsspindel (20), das Stützelement (30) sowie das Führungselement (40) aus Kunststoff bestehen.

## Claims

1. Drive spindle (20), in particular for driving garage doors, having recesses (202) or projections which are arranged on the circumferential surface and can be connected to corresponding projections (402) or recesses of a guide element (40) for the purpose of axial movement, the drive spindle (20) consisting of at least two components (22, 24) which can be connected to one another in a releasable manner, **characterized in that** the drive spindle (20) has an axially running bore (204) into which a supporting element (30) can be at least partly inserted, this supporting element (30) being composed of at least two parts (32, 34) which can be connected to one another in a releasable manner.

2. Drive spindle (20) according to Claim 1, **characterized in that** the drive spindle (20) is designed as a screw spindle having a flat thread, in particular a trapezoidal thread, or a round thread.

3. Drive spindle (20) according to Claim 1, **characterized in that** the circumferential surface of the drive spindle (20) has a thread-shaped recess (202) which can be connected to an internal thread or to a projection (402) of the guide element (40).

4. Drive spindle (20) according to one of the preceding claims, **characterized in that** the supporting element consists of a cable, a rod (30) or a tube.

5. Drive spindle (20) according to Claim 4, **characterized in that** the parts (32, 34) of the rod (30) or of the tube can be connected by means of a thread (322, 342).

6. Drive spindle (20) according to one or more of Claims 1 to 5, **characterized in that** the supporting element can be connected to the component to be moved, in particular a garage door .

7. Drive spindle (20) according to one or more of Claims 1 to 6, **characterized in that** the components (23, 24) of the drive spindle (20) have tooth systems at the end faces, by means of which tooth systems the components (22, 24) can be connected.

8. Drive spindle (20) according to Claim 7, **characterized in that** the tooth systems are designed as serrations.

9. Drive spindle (20) according to one or more of Claims 1 to 8, **characterized in that** the guide element (40) can be accommodated in a holding device (50).

10. Drive spindle (20) according to Claim 9, **characterized in that** the holding device (50) consists of a sectional girder.

11. Drive spindle (20) according to one or more of Claims 1 to 10, **characterized in that** the drive spindle (20) and/or the supporting element (30) and/or the guide element (40) and/or the holding device (50) contains plastic or is made of plastic.

12. Drive spindle (20) according to one or more of Claims 1 to 11, **characterized in that** the holding device (50) is made of steel and the drive spindle (20), the supporting element (30) and the guide element (40) are made of plastic.

## Revendications

1. Broche d'entraînement (20), notamment pour l'entraînement de portes de garage, avec des évidements (202) ou saillies disposés sur la face périphérique qui, dans le but du mouvement axial, peuvent être reliés à des saillies (402) ou évidements correspondants d'un élément de guidage (40), où la broche d'entraînement (20) est constituée par au moins deux composants (22, 24) qui peuvent être reliés amoviblement l'un à l'autre, **caractérisée en ce que** la broche d'entraînement (20) présente un perçage (204) s'étendant axialement dans lequel un élément d'appui (30) est insérable au moins partiellement, qui est constitué d'au moins deux parties (32, 34) reliées amoviblement l'une à l'autre.

2. Broche d'entraînement (20) selon la revendication 1, **caractérisée en ce que** la broche d'entraînement (20) est réalisée comme broche filetée avec un filetage plat, notamment un filetage trapézoïdal ou un filetage rond.

3. Broche d'entraînement (20) selon la revendication 1, **caractérise en ce que** la face périphérique de la broche d'entraînement (20) présente un évidement en forme de filetage (202) qui peut être relié à un taraudage ou à une saillie (402) de l'élément de guidage (40).

4. Broche d'entraînement (20) selon l'une des revendications précédentes, **caractérisée en ce que** l'élément d'appui est formé par une corde, une tige (30) ou un tube.

5. Broche d'entraînement (20) selon la revendication 4, **caractérisée en ce que** les parties (32, 34) de la tige (30) ou du tube peuvent être assemblées au moyen d'un filetage (322, 342).

6. Broche d'entraînement (20) selon l'une ou plusieurs des revendications 1 à 5, **caractérisée en ce que** l'élément d'appui peut être assemblé avec le composant à déplacer, notamment une porte de garage.

7. Broche d'entraînement (20) selon l'une ou plusieurs des revendications 1 à 6, **caractérisée en ce que** les composants (23, 24) de la broche d'entraînement (20) présentent des dentures au côté frontal au moyen desquelles les composants (22, 24) peuvent être assemblés.

8. Broche d'entraînement (20) selon la revendication 7, **caractérisée en ce que** les dentures sont réalisées sous forme de crantages Hirth.

9. Broche d'entraînement (20) selon l'une ou plusieurs des revendications 1 à 8, **caractérisée en ce que** l'élément de guidage (40) peut être reçu dans un dispositif de retenue (50).

10. Broche d'entraînement (20) selon la revendication 9, **caractérisée en ce que** le dispositif de retenue (50) est constitué d'un support profilé.

11. Broche d'entraînement (20) selon l'une ou plusieurs des revendications 1 à 10, **caractérisée en ce que** la broche d'entraînement (20) et/ou l'élément d'appui (30) et/ou l'élément de guidage (40) et/ou le dispositif de retenue (50) comprend de la matière synthétique ou est constitué de matière synthétique.

12. Broche d'entraînement (20) selon l'une ou plusieurs des revendications 1 à 11, **caractérisée en ce que** le dispositif de retenue (50) est en acier et la broche d'entraînement (20), l'élément d'appui (30) ainsi que l'élément de guidage (40) sont en matière synthétique.
